# EUROPÄISCHE PATENTANMELDUNG

(11) **EP 2 565 478 A1**
(43) Veröffentlichungstag der Anmeldung: **06.03.2013**
(21) Anmeldenummer: 11179166.1
(22) Anmeldetag: 29.08.2011
(51) Int. Cl.: F16D 1/093

(54) **Spannnabenanordnung**

(71) Anmelder: SIEMENS AKTIENGESELLSCHAFT, 80333 München (DE)
(72) Erfinder: Valtwies, Ewald, 48691 Vreden (DE)

(57) **Zusammenfassung**

Die vorliegende Erfindung betrifft eine Spannnabenanordnung zur Fixierung eines hohlzylindrischen Bauteils (W) wie beispielsweise einer Hülse oder einer Hohlwelle mit einem Nabengrundkörper (1), der eine zentrale Durchgangsbohrung (2) aufweist, einem Spannring (5), der an dem Nabengrundkörper gehalten ist und axial von diesem abragt, und einem Klemmring (6), der axial auf den Spannring (5) geschoben werden kann, wobei der Spannring und der Klemmring zueinander korrespondierende Eingriffsflächen aufweisen, die miteinander derart zusammenwirken, dass der Spannring (5) elastisch nach innen verformt wird, um ein in dem Spannring positioniertes Bauteil zu fixieren, wenn der Klemmring auf den Spannring geschoben wird. Des Weiteren betrifft die Erfindung eine Spannnabenanordnung zur Fixierung eines hohlzylindrischen Bauteils (W) wie beispielsweise einer Hülse oder einer Hohlwelle mit einem Nabengrundkörper (1), der eine zentrale Durchgangsbohrung aufweist, einem Spannring (5), der an dem Nabengrundkörper gehalten ist und axial von diesem abragt, und einem Klemmring (6), der axial in den Spannring geschoben werden kann, wobei der Spannring und der Klemmring zueinander korrespondierende Eingriffsflächen aufweisen, die miteinander derart zusammenwirken, dass der Spannring (5) elastisch nach außen verformt wird, um ein auf dem Spannring positioniertes Bauteil zu fixieren, wenn der Klemmring in den Spannring geschoben wird.
Die Spannnabenanordnung weist weiterhin einen Stützring (9) auf, der das zu spannende Bauteil während des Spannvorgangs an der dem Spannring (5) gegenüberliegende innen- bzw. Außenseite abstützt.

## Beschreibung

Die vorliegende Erfindung betrifft eine Spannnabenanordnung zur Fixierung eines hohlzylindrischen Bauteils wie beispielsweise einer Hülse oder einer Hohlwelle mit einem Nabengrundkörper, der eine zentrale Durchgangsbohrung aufweist, einem Spannring, der an dem Nabengrundkörper gehalten ist und axial von diesem abragt, und einem Klemmring, der axial auf den Spannring geschoben werden kann, wobei der Spannring und der Klemmring zueinander korrespondierende Eingriffsflächen aufweisen, die miteinander derart zusammenwirken, dass der Spannring elastisch nach innen verformt wird, um ein in dem Spannring positioniertes Bauteil zu fixieren, wenn der Klemmring auf den Spannring geschoben wird. Des Weiteren betrifft die Erfindung eine Spannnabenanordnung zur Fixierung eines hohlzylindrischen Bauteils wie beispielsweise einer Hülse oder einer Hohlwelle mit einem Nabengrundkörper, der eine zentrale Durchgangsbohrung aufweist, einem Spannring, der an dem Nabengrundkörper gehalten ist und axial von diesem abragt, und einem Klemmring, der axial in den Spannring geschoben werden kann, wobei der Spannring und der Klemmring zueinander korrespondierende Eingriffsflächen aufweisen, die miteinander derart zusammenwirken, dass der Spannring elastisch nach außen verformt wird, um ein auf dem Spannring positioniertes Bauteil zu fixieren, wenn der Klemmring in den Spannring geschoben wird.

Spannnabenanordnungen dieser Art sind allgemein bekannt und werden beispielsweise in Ganzstahlkupplungen eingesetzt, um eine Hohlwelle an einem Kupplungsflansch zu fixieren. In diesem Fall ist der Kupplungsflansch an einem Nabengrundkörper ausgebildet, der einen axial von diesem abragenden Spannring trägt, welcher eine zentrale Öffnung zur Aufnahme einer zu fixierenden Hohlwelle aufweist und durch Aufschieben eines Klemmrings elastisch nach innen verformbar ist. Dazu sind die äußere Mantelfläche des Spannrings und die innere Mantelfläche des Klemmrings als konusförmige Eingriffsflächen derart ausgebildet, dass der Spannring nach innen verformt wird, wenn der Klemmring auf den Spannring geschoben bzw. durch entsprechende Spannschrauben, welche den Nabengrundkörper durchgreifen, gezogen wird.

Alternativ ist es möglich, die Hohlwelle an der Außenseite des Spannrings zu spannen. In diesem Fall ist die Außenfläche des Spannrings als eine zylindrische Spannfläche ausgebildet und sind die miteinander kommenden Innenfläche des Spannrings und die Außenfläche eines Klemmrings, der in den Spannring axial eingeschoben wird, als zueinander korrespondierende Kegelflächen ausgebildet.

Im Betrieb wird zur Herstellung einer Verbindung zwischen dem Kupplungsflansch und einer Hohlwelle der Klemmring an dem Spannring positioniert. Anschließend wird die zu fixierende Hohlwelle in bzw. auf den Spannring geschoben. Abschließend werden die Spannschrauben gleichmäßig und der Reihe nach angezogen, um den Klemmring in Richtung des Kupplungsflansches auf den Spannring zu ziehen, bis der Klemmring an einem Axialanschlag des Nabengrundkörpers und hier insbesondere des Kupplungsflansches anliegt.

Die bekannten Spannnabenanordnungen übertragen ein Drehmoment mit Hilfe der elastischen Pressverbindung zwischen dem Spannring und der Hohlwelle. Durch Aufziehen des Klemmrings mittels der Spannschrauben wird die erforderliche Flächenpressung im Kontaktbereich zwischen der Hohlwelle und dem Spannring erzeugt. Nach dem Anziehvorgang liegt der Klemmring an dem Nabengrundkörper an. Das Spaltmaß zwischen dem Nabengrundkörper und dem Klemmring ist dann null. Dies bewirkt, dass auch bei mehrmaligem Montieren und Demontieren der Wuchtzustand erhalten bleibt (kein Taumeleffekt). Die Klemmverbindungen sind dabei so ausgelegt, dass die angegebenen Maximaldrehmomente übertragen werden können. Diese dürfen nicht überschritten werden. Hierbei beträgt der rechnerische Reibwert zwischen der Welle und dem Spannring µ=0,16. Die übertragbaren Drehmomente hängen dabei auch von dem Passungsspiel zwischen der Welle und dem Spannring ab. Entsprechend sind die Bohrungen/Außendurchmesser der zu verbindenden Bauteile als Passungspaarungen auszuführen.

Die bekannten Spannnabenanordnungen haben sich in der Praxis durchaus bewährt. Beim Spannen von Hohlwellen kann jedoch das Problem auftreten, dass diese durch die über den Spannring aufgebrachte Presskraft elastisch stark verformt werden und es zu unerwünschten Durchmesseränderungen kommt. Daher sind die verwendbaren Pressdrücke begrenzt. Wenn hohe Pressdrücke erforderlich sind, müssen daher zusätzlich aufwändige Maßnahmen getroffen werden. So müssen die Spannnabenanordnungen länger und größer dimensioniert sein, und des Weiteren müssen die Wandstärken der Hohlwellen entsprechend groß sein. Des Weiteren kommen höherwertige Werkstoffe zum Einsatz, die hohe elastische Verformungen zulassen.

Aufgabe der vorliegenden Erfindung ist es daher, eine Spannnabenanordnung der eingangs genannten Art so auszugestalten, dass auch bei hohen Spannkräften unerwünschte Durchmesser Änderungen an einer zu spannenden Hohlwelle vermieden werden.

Diese Aufgabe ist bei einer Spannnabenanordnung der eingangs genannten Art, bei welcher einer Hohlwelle innenseitig von dem Spannring gespannt wird, dadurch gelöst, dass an der Innenseite des Spannrings und konzentrisch zu diesem ein Stützring unter Bildung einer ringförmigen Aufnahme für ein zu spannendes Bauteil von dem Nabengrundkörper axial abragt, wobei an der äußeren Mantelfläche des Stützrings eine Stützfläche gebildet ist, welche ein in die Aufnahme eingeschobenes Bauteil an der dem Spannring gegenüberliegenden Innenseite abstützt. Bei einer Spannnabenanordnung, die eine Hohlwelle an der Außenseite des Spannrings fixiert, ist die vorstehende Erfindung weiterhin dadurch gelöst, dass an der Außenseite des Spannrings und konzentrisch zu diesem ein Stützring unter Bildung einer ringförmigen Aufnahme für ein zu spannendes Bauteil von dem Nabengrundkörper axial abragt, wobei an der inneren Mantelfläche des Stützrings eine Stützfläche gebildet ist, welche ein in die Aufnahme eingeschobenes Bauteil an der dem Spannring gegenüberliegenden Außenseite abstützt.

Der Erfindung liegt somit die Überlegung zugrunde, eine zu spannende Hohlwelle während des Spannvorgangs an der dem Spannring gegenüberliegenden Innen- bzw. Außenseite abzustützen, so dass elastische Durchmesserveränderungen in Richtung der aufgebrachten Spannkräfte verhindert werden. Hierzu ist an dem Nabengrundkörper ein Stützring konzentrisch zu dem Spannring vorgesehen, so dass zwischen dem Spannring und dem Stützring eine Aufnahme definiert wird, in welche die Hohlwelle eingesetzt wird. Der Durchmesser der aufnahmeseitigen Wandung des Stützrings ist dabei so dimensioniert, dass die Hohlwelle flächig an ihm anliegt und somit eine Verformung der Hohlwelle durch den Stützring wirksam verhindert wird.

In bevorzugter Weise wird die Hohlwelle an dem Stützring durch einen Presssitz fixiert, und zwar insbesondere bevor der Spannvorgang über den Spannring vorgenommen wird. Beispielsweise ist es möglich, in an sich bekannter Weise den Presssitz zwischen dem Stützring und der Hohlwelle über eine Wärmeschrumpfverbindung herzustellen. Alternativ ist es möglich, den Stützring ebenfalls als Spannring auszubilden, der elastisch durch einen Klemmring in Richtung der Aufnahme bzw. einer in die Aufnahme eingeschobenen Hohlwelle verformt werden kann. Im Falle einer Spannnabenanordnung mit Innenspannung ist entsprechend ein weiterer Klemmring vorgesehen, der axial in den Stützring geschoben werden kann, wobei der weitere Klemmring und der Stützring zueinander korrespondierende Eingriffsflächen aufweisen, die derart zusammenwirken, dass der Stützring radial in Richtung der Aufnahme verformt wird, wenn der weitere Klemmring axial in den Stützring geschoben wird. Alternativ zeichnet sich eine Spannnabenanordnung zur Außenspannung dadurch aus, dass ein weiterer Klemmring vorgesehen ist, der axial auf den Stützring geschoben werden kann, wobei der weitere Klemmring und der Stützring zueinander korrespondierende Eingriffsflächen aufweisen, die derart zusammenwirken, dass der Stützring radial in Richtung der Aufnahme verformt wird, wenn der weitere Klemmring axial auf den Stützring geschoben wird.

Dabei kann der weitere Klemmring - wie im Übrigen auch der andere Klemmring - an dem Nabengrundkörper durch Spannschrauben fixiert sein, welche entsprechende Durchgangsbohrungen in dem Nabengrundkörper durchgreifen und in den Klemmring eingeschraubt sind. Die Spannschrauben dienen hierbei dazu, den Klemmring axial gegen den Nabengrundkörper und insbesondere einen daran fixierten Kupplungsflansch zu ziehen.

Im Übrigen ist gemäß einer bevorzugten Ausführungsform der Erfindung vorgesehen, dass der Stützring an dem Nabengrundkörper lösbar fixiert, insbesondere festgeschraubt ist. Zusätzlich kann der Stützring mit dem Nabengrundkörper verstiftet sein, um eine höhere Drehmomentübertragung zu ermöglichen.

Schließlich können die Wandungen der Aufnahme aus einem Material mit einem niedrigen Reibkoeffizienten - beispielsweise Bronze oder Messing - bestehen. Insbesondere ist es möglich, in die Aufnahme Gleithülsen aus entsprechenden Materialien einzusetzen, welche dann die Wandungen der Aufnahme bilden.

Hinsichtlich weiterer Vorteile und Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine erste Ausführungsform einer Spannnabenanordnung gemäß der vorliegenden Erfindung im Längsschnitt;
- Figur 2: eine weitere Ausführungsform einer erfindungsgemäßen Spann- bzw. Rutschnabenanordnung gemäß der vorliegenden Erfindung im Längsschnitt; und
- Figur 3: eine dritte Ausführungsform einer erfindungsgemäßen Spannnabenanordnung im Längsschnitt.

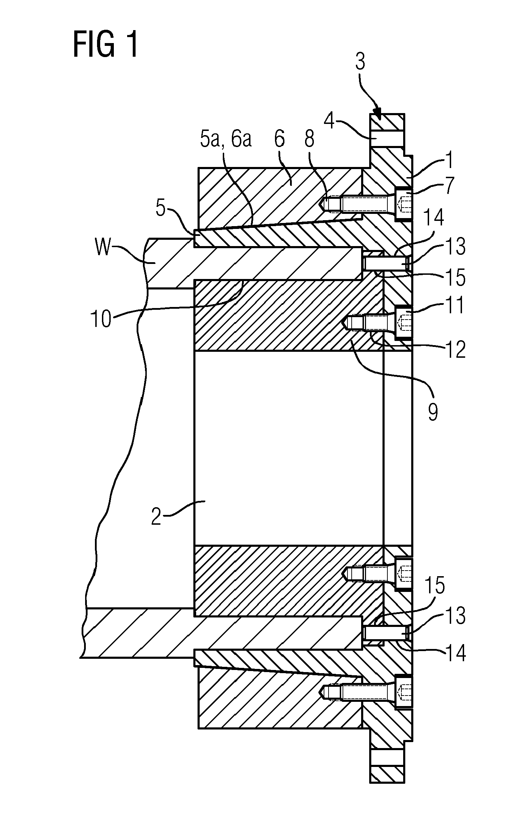

In der Figur 1 ist eine erste Ausführungsform einer Spannnabenanordnung gemäß der vorliegenden Erfindung dargestellt, die hier einen Teil einer Ganzstahlkupplung bildet. Die Spannnabenanordnung besitzt einen Nabengrundkörper 1, der eine zentrale Durchgangsbohrung 2 aufweist und einen Kupplungsflansch 3 trägt, welcher an seinem äußeren Randbereich mehrere gleichmäßig in Umfangsrichtung beabstandet voneinander angeordnete Durchgangsbohrungen 4 für Verbindungsschrauben aufweist. Die Spannabenanordnung umfasst des Weiteren einen Spannring 5, der axial von dem Nabengrundkörper 1 abragt und hier einstückig mit diesem ausgebildet ist. Die Innenseite des Spannrings 5 ist als eine zylindrische Bohrung ausgebildet, in welcher ein zylindrisches Bauteil fixiert werden soll. Ferner umfasst die Spannnabenanordnung einen Klemmring 6, der axial auf den Spannring 5 geschoben und an dem Nabengrundkörper 1 durch mehrere Spannschrauben 7, welche den Nabengrundkörper 1 durchgreifen und in entsprechende Sackbohrungen 8 des Klemmrings 6 eingeschraubt sind, fixiert sind.

In der Figur 1 ist gut erkennbar, dass die äußere Mantelfläche des Spannrings 5 und die Innenfläche des Klemmrings 6 als zueinander korrespondierende, konus- bzw. kegelstumpfförmige Eingriffsflächen 5a, 6a ausgebildet sind, die miteinander derart zusammenwirken, dass der Spannring 5 elastisch nach innen verformt wird, um ein in dem Spannring 5 positioniertes Bauteil zu fixieren, wenn der Klemmring 6 axial in Richtung des Nabengrundkörpers 1 auf den Spannring 5 geschoben bzw. durch Eindrehen der Spannschrauben 7 in den Spannring 5 gezogen wird.

An der Innenseite des Spannrings 5 und konzentrisch zu diesem ist ein Stützring 9 vorgesehen, der unter Bildung einer ringförmigen Aufnahme 10 axial von dem Nabengrundkörper 1 abragt und mit diesem durch mehrere Befestigungsschrauben 11 lösbar verbunden ist, welche den Nabengrundkörper 1 durchgreifen und in entsprechende Gewindebohrungen 12 des Stützrings 9 eingeschraubt sind. Zusätzlich ist der Stützring 9 mit dem Nabengrundkörper 1 durch mehrere Stifte 13 verbunden, die in entsprechende Passbohrungen 14, 15 des Nabengrundkörpers 1 und des Stützrings 9 eingepresst sind. Die Befestigungsschrauben 11 und die Stifte 13 sind gleichmäßig in Umfangsrichtung der Spannnabenanordnung verteilt vorgesehen.

In die ringförmige Aufnahme 10, die zwischen der zylindrischen Außenwandung des Stützrings 9 und dem Spannring 5 gebildet wird, ist das Ende einer Hohlwelle W positioniert und festgespannt. Konkret ist die Hohlwelle W an dem Stützring 9 durch einen Presssitz fixiert. Dieser wird durch thermische Aufweitung der Hohlwelle W und anschließendes Abkühlen nach dem Einschieben der Hohlwelle W in die Aufnahme 10 realisiert. Des Weiteren ist die Hohlwelle W von außen durch den Spannring 5 festgeklemmt, der durch den außen sitzenden Klemmring 6 elastisch nach innen verformt ist.

Zum Lösen der Verbindung werden zunächst die Spannschrauben 7 gelöst, und anschließend wird der Klemmring 6 gegebenenfalls unter Verwendung von nicht dargestellten Abdrückschrauben axial von dem Spannring 5 gezogen. Hierdurch kann der Spannring 5 radial nach außen in seine Ausgangslage elastisch zurückkehren, so dass er die Hohlwelle W außenseitig freigibt. Abschließend wird die Hohlwelle W erwärmt, um den Presssitz mit dem Stützring 9 zu lösen.

Zum Wiederherstellen der Verbindung wird eine erwärmte Hohlwelle W in die Aufnahme 10 geschoben und abgekühlt, um den Presssitz mit dem Stützring 9 herzustellen. Anschließend wird der Klemmring 6 in Richtung des Nabengrundkörpers 1 auf den Spannring 5 gezogen, indem die Spannschrauben 7 der Reihe nach gleichmäßig festgezogen werden, bis der Klemmring 6 axial an dem Nabengrundkörper 1 in Anlage kommt. Dabei wird der Spannring 5 durch das Zusammenwirken der kegelstumpfförmigen Eingriffsflächen 5a, 6a von Spannring 5 und Klemmring 6 elastisch nach innen verformt, um die Hohlwelle W außenseitig festzuspannen. Während des Vorgangs werden übermäßige Verformungen der Hohlwelle W nach innen hin durch den Stützring 9 verhindert. Des Weiteren lassen sich hohe Drehmomente zwischen der Spannnabenanordnung einerseits und der Hohlwelle W andererseits übertragen, weil die Hohlwelle W sowohl außenseitig, als auch innenseitig durch den Stützring 9 und den Spannring 5 festgespannt ist.

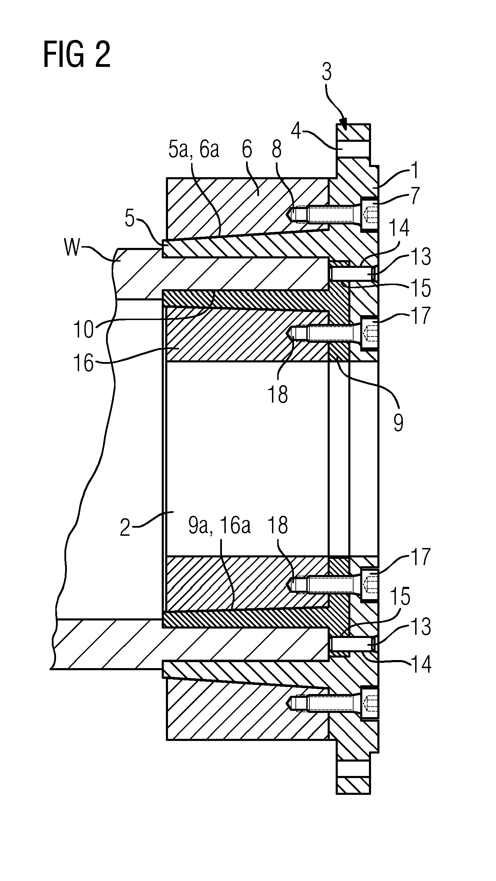

In der Figur 2 ist eine zweite Ausführungsform einer Spannnabenanordnung gemäß der vorliegenden Erfindung dargestellt. Diese entspricht in ihrem Grundaufbau der in Figur 1 dargestellten Spannnabenanordnung, so dass auf die entsprechenden Ausführungen Bezug genommen wird. Der einzige Unterschied besteht darin, dass das Stützelement 9 ebenfalls nach Art eines Spannrings ausgebildet ist, der radial nach außen elastisch verformbar ist, um den Presssitz zwischen der Hohlwelle W und dem Stützelement 9 herzustellen. Hierzu ist ein weiterer Klemmring 16 vorgesehen, der axial in den Stützring 9 geschoben und an dem Nabengrundkörper 1 durch mehrere Spannschrauben 17, welche den Nabengrundkörper 1 und den Stützring 9 durchgreifen und in entsprechende Sackbohrungen 18 des Klemmrings 16 eingeschraubt sind, fixiert sind. Der Stützring 9 und der weitere Klemmring 16 weisen korrespondierende konische bzw. kegelstumpfförmige Eingriffsflächen 9a, 16 auf, die derart zusammenwirken, dass der Stützring 9 radial in Richtung der Aufnahme 10 nach außen verformt wird, wenn der weitere Klemmring 16 axial in den Stützring 9 in Richtung des Nabengrundkörpers 1 geschoben bzw. durch Eindrehen der Spannschrauben 17 in den Stützring 9 gezogen wird.

Zum Lösen der Verbindung werden die Spannschrauben 7 und die Befestigungsschrauben 11 gleichmäßig gelöst und die beiden Klemmringe 6, 16 axial von dem Nabengrundkörper 1 wegbewegt, so dass sich der Spannring 5 nach außen und der ebenfalls als Spannring ausgebildete Stützring 9 nach innen elastisch zurückbewegen und die Hohlwelle W freigeben.

Zum Fixieren einer Hohlwelle W in der Aufnahme 10 werden lediglich die beiden Sätze von Spannschrauben 7, 17 gleichmäßig angezogen, um die Klemmringe 6, 16 axial in Richtung des Nabengrundkörpers 1 zu ziehen und somit den Spannring 5 elastisch nach innen und den Stützring 9 elastisch nach außen zu verformen. Dabei wird die Hohlwelle W vorzugsweise zunächst durch Festziehen eines Klemmrings innen- oder außenseitig, und anschließend durch Festziehen des anderen Klemmrings an der gegenüberliegenden Seite fixiert.

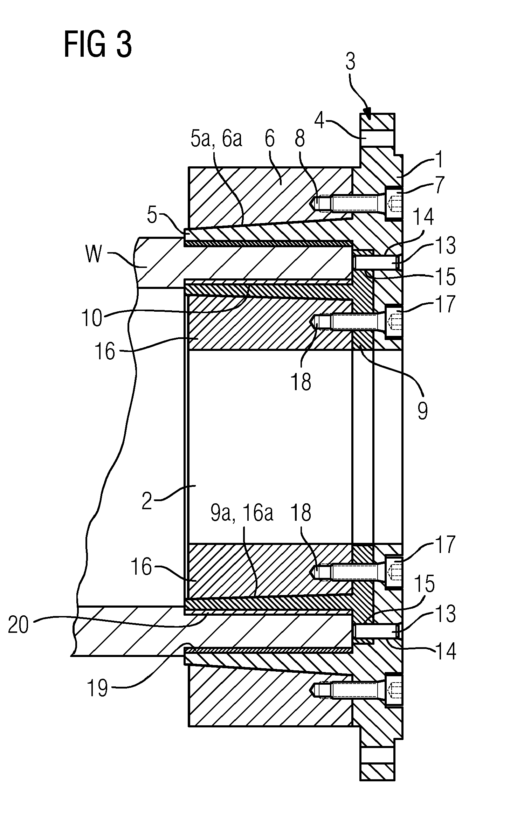

Die in Figur 3 dargestellte dritte Ausführungsform einer Spannnabenanordnung gemäß der vorliegenden Erfindung entspricht der in der Figur 2 dargestellten Ausführungsform. Der einzige Unterschied besteht darin, dass in die Aufnahme zwei Gleitbuchsen 19, 20 eingesetzt sind, die zwischen der Hohlwelle W einerseits und dem Stützring 9 bzw. dem Spannring 5 andererseits positioniert sind und mit denen die Hohlwelle W in Kontakt kommt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Spannnabenanordnung zur Fixierung eines hohlzylindrischen Bauteils (W) wie beispielsweise einer Hülse oder einer Hohlwelle mit einem Nabengrundkörper (1), der eine zentrale Durchgangsbohrung (2) aufweist, einem Spannring (5), der an dem Nabengrundkörper (1) gehalten ist und axial von diesem abragt, und einem Klemmring (6), der axial auf den Spannring (5) geschoben werden kann, wobei der Spannring (5) und der Klemmring (6) zueinander korrespondierende Eingriffsflächen (5a, 6a) aufweisen, die miteinander derart zusammenwirken, dass der Spannring (5) elastisch nach innen verformt wird, um ein in dem Spannring (5) positioniertes Bauteil (W) zu fixieren, wenn der Klemmring (6) auf den Spannring (5) geschoben wird, **dadurch gekennzeichnet, dass** an der Innenseite des Spannrings (5) und konzentrisch zu diesem ein Stützring (9) unter Bildung einer ringförmigen Aufnahme (10) für ein zu spannendes Bauteil (W) von dem Nabengrundkörper (1) axial abragt, wobei an der äußeren Mantelfläche des Stützrings (9) eine Stützfläche gebildet ist, welche ein in die Aufnahme (10) geschobenes Bauteil (W) an der dem Spannring (5) gegenüberliegenden Innenseite abstützt.

2. Spannnabenanordnung zur Fixierung eines hohlzylindrischen Bauteils (W) wie beispielsweise einer Hülse oder einer Hohlwelle mit einem Nabengrundkörper (1), der eine zentrale Durchgangsbohrung (2) aufweist, einem Spannring (5), der an dem Nabengrundkörper (1) gehalten ist und axial von diesem abragt, und einem Klemmring (6), der axial in den Spannring (5) geschoben werden kann, wobei der Spannring (5) und der Klemmring (6) zueinander korrespondierende Eingriffsflächen aufweisen, die miteinander derart zusammenwirken, dass der Spannring (5) elastisch nach außen verformt wird, um ein auf dem Spannring (5) positioniertes Bauteil (W) zu fixieren, wenn der Klemmring (6) in den Spannring (5) geschoben wird,
**dadurch gekennzeichnet, dass**
an der Außenseite des Spannrings (5) und konzentrisch zu diesem ein Stützring (9) unter Bildung einer ringförmigen Aufnahme für ein zu spannendes Bauteil von dem Grundkörper axial abragt, wobei an der inneren Mantelfläche des Stützrings eine Stützfläche gebildet ist, welche ein in die Aufnahme eingeschobenes Bauteil an der dem Spannring gegenüberliegenden Außenseite
abstützt.

3. Spannnabenanordnung nach Anspruch 1,
**dadurch gekennzeichnet, dass**
ein weiterer Klemmring (16) vorgesehen ist, der axial in den Stützring (9) geschoben werden kann, wobei der Stützring (9) und der weitere Klemmring (16) zueinander korrespondierende Eingriffsflächen (9a, 16a) aufweisen, die derart zusammenwirken, dass der Stützring (9) radial in Richtung der Aufnahme (10) verformt wird, wenn der weitere Klemmring (16) axial in den Stützring (9) geschoben wird.

4. Spannnabenanordnung nach Anspruch 2,
**dadurch gekennzeichnet, dass**
ein weiterer Klemmring vorgesehen ist, der axial auf den Stützring geschoben werden kann, wobei der weitere Klemmring und der Stützring zueinander korrespondierende Eingriffsflächen aufweisen, die derart zusammenwirken, dass der Stützring radial in Richtung der Aufnahme verformt wird, wenn der weitere Klemmring axial auf den Stützring geschoben wird.

5. Spannnabenanordnung nach Anspruch 3 oder 4,
**dadurch gekennzeichnet, dass**
der weitere Klemmring (16) an dem Nabengrundkörper (1) durch Spannschrauben (17) fixiert ist, welche entsprechende Durchgangsbohrungen in dem Nabengrundkörper (1) durchgreifen und in den Klemmring (16) eingeschraubt sind.

6. Spannnabenanordnung nach einem der Ansprüche 3 bis 5,
**dadurch gekennzeichnet, dass**
in die Aufnahme ein hohlzylindrisches Bauteil (W) geschoben und zwischen dem Spannring (5) und dem Stützring (7) festgespannt ist, wobei sowohl der Spannring (5), als auch der Stützring (9) durch einen Klemmring (6, 16) elastisch gegen das Bauteil (W) gespannt ist.

7. Spannnabenanordnung nach Anspruch 1 oder 2,
**dadurch gekennzeichnet, dass**
in die Aufnahme (10) ein hohlzylindrisches Bauteil (W) eingeschoben und zwischen dem Spannring (5) und dem Stützring (9) festgespannt ist, wobei das hohlzylindrische Bauteil (W) an dem Stützring (9) durch einen Presssitz, der insbesondere durch eine Wärmeschrumpfverbindung erzeugt ist, fixiert und an der gegenüberliegenden Wandung durch Aufschieben des Klemmrings (6) auf den Spannring (5) festgespannt ist.

8. Spannnabenanordnung nach einem der vorhergehenden Ansprüche,
**dadurch gekennzeichnet, dass**
die Stützfläche zylindrisch ausgebildet sind.

9. Spannnabenanordnung nach einem der vorhergehenden Ansprüche,
**dadurch gekennzeichnet, dass**
der Stützring (9) an dem Nabengrundkörper (1) lösbar fixiert, insbesondere festgeschraubt ist.

10. Spannnabenanordnung nach einem der vorhergehenden Ansprüche,
**dadurch gekennzeichnet, dass**
der Stützring (9) mit dem Nabengrundkörper (1) verstiftet ist.

11. Spannnabenanordnung nach einem der vorherigen Ansprüche,
**dadurch gekennzeichnet, dass**
die Wandungen der Aufnahme aus einem Material mit einem niedrigen Reibkoeffizienten bestehen und insbesondere in die Aufnahme Gleithülsen (19, 20) eingesetzt sind, welche die Wandungen bilden.
